# EUROPEAN PATENT SPECIFICATION

(11) **EP 4 041 543 B1**
(45) Date of publication and mention of the grant of the patent: **28.01.2026**
(21) Application number: 20789956.8
(22) Date of filing: 09.10.2020
(51) Int. Cl.: B32B 3/26, B29C 49/24, G09F 3/04, B32B 7/06, B32B 7/14, B32B 27/08, B32B 27/30, B32B 27/32, B29C 51/16

(54) **IN-MOULD LABELLING WEB**
IN-MOULD-ETIKETTIERBAHN
BANDE D'ÉTIQUETAGE DANS LE MOULE

(30) Priority: 10.10.2019 GB 201914678
(43) Date of publication of application: 17.08.2022
(73) Proprietor: Innovia Films Limited, Wigton, Cumbria CA7 9BG (GB); Alpla-Werke Alwin Lehner GmbH und Co. KG, 6971 Hard (AT)
(72) Inventor: FENKART, Norbert, 6845 Hohenems (AT); KONKEL, Christopher, Cumbria CA7 9BG (GB); LANGSTAFF, Stephen, Cumbria CA7 9BG (GB)
(74) Representative: Brand Murray Fuller LLP
(86) International application number: PCT/EP2020/078502
(87) International publication number: WO 2021/069718

(56) References cited:
- GB-A- 2 084 077
- US-A1- 2014 076 488
- US-A1- 2018 207 845

## Description

The present invention concerns a feedstock web for in-mould labelling.

In-mould labelling is a method of attaching a label to a product during the formation of the product in a mould. This has the benefit of providing a label that is intimately bonded to the article and therefore is highly resistant to ripping, scratching, peeling and other forms of label damage.

The in-mould labels must be introduced into the mould before the product is formed. A number of different ways of introducing successive labels into the mould, such that successive labelled products can be manufactured, are known in the art.

EP0324857 and US4501548 disclose the introduction of individual labels into a label magazine, from which the labels are successively attached to articles. Similarly, DE1805328 discloses an apparatus that uses a piston to punch a label out of a sheet before moving the label into the mould.

US4824630 discloses an apparatus that simultaneously die cuts labels from a web and delivers them to the open mould sections.

These methods of the art introduce an additional step before the labelling of the product in which the individual labels are separated from a web and positioned within the mould. This increases the time, expense and complexity of the in-mould labelling process.

US2004056389 discloses a foil for use in an automatic dispenser, comprising a release liner, an adhesive layer and a label foil. The release liner protects the adhesive layer and helps in the labelling process, as it is bent in order to release the label section. However, this bending requires complex machinery to ensure that the labels are reliably removed and accurately positioned during the in-mould labelling process.

US2018207845 discloses a labelstock web that does not comprise a release liner. Instead, the labels are fed into the mould as part of a web and are removed from the web by removing the article from the mould. This means that no additional equipment is required to remove the label from the labelstock web, thereby reducing the complexity of the process and the machinery required.

However, removing the release liner in this arrangement was found to increase the likelihood of tearing of the labelstock web both as it was fed through the machinery and as the label was removed.

An improved way of providing a succession of labels into a mould for in-mould labelling is therefore required.

According to a first aspect of the present invention, there is provided a feedstock web for in-mould labelling comprising a label web wherein an area of weakness separates a label portion of the label web from a skeletal matrix portion of the label web, the label web having a heat sealable layer on a first side and a carrier web laminated to the skeletal matrix portion of the label web on a second side, the carrier web serving to reinforce the skeletal matrix portion against tearing when the label portion is detached from the skeletal matrix portion and the carrier web in an in-mould labelling process.

The present invention makes use of a carrier web laminated to the skeletal matrix portion of the label web and extending over the opposite side of the label web to the heat sealable layer. This helps to reinforce the feedstock web, such that tearing of the web as it is passed through in-mould labelling machinery is reduced and preferably prevented. The positioning of the carrier web also ensures that the heat sealable layer can easily be brought into contact with the article to be labelled during an in-mould labelling process.

The label web may comprise a film, preferably a polymeric film and more preferably a polyolefinic film. The label web may comprise paper. The polymeric film may be made by any process known in the art, including, but not limited to, cast sheet, cast film and blown film. The label web may have a monolayer or multilayer structure, which may be formed by coextrusion, lamination, extrusion coating, an alternative coating method, or any combination thereof.

The label web may comprise a biaxially orientated polypropylene (BOPP) film, which may be prepared as a balanced film using substantially equal machine direction and transverse direction stretch ratios, or can be unbalanced, where the film is significantly more orientated in one direction. Sequential stretching can be used, in which heated rollers effect stretching of the film in the machine direction and a stenter oven is thereafter used to effect stretching in the transverse direction. Alternatively, simultaneous stretching may be used, for example, using the so-called bubble process or simultaneous draw stenter stretching.

The label web may comprise any number of additional compatible functional or aesthetic materials such as anti-block additives, opacifiers, fillers, UV absorbers, cross-linkers, colourants and waxes. The label web may be further treated, for example by corona discharge treatment to improve ink receptivity of the film or of the skin layer of the film. The label web of the invention may be provided with other layers, such as primer layers, printable layers, print layers, overlaquers and barrier layers. Suitable barrier layers include those made from a transparent inorganic coating. The label web may be opaque.

The label web used in accordance with the present invention can be of a variety of thicknesses, depending on the application requirements. The label web may be between 10µm and 240µm thick, preferably between 30µm and 90µm thick. The label web may comprise a PVDC coating. The PVDC coating may be on the second side of the label web, i.e. the side opposite the heat sealable layer. Generally speaking, the thicker the substrate, the better its ability to insulate the PVDC coating against heat from the molten material entering the mould to create the article in the in-mould labelling process, but such considerations must be tempered by considerations such as cost, functionality and aesthetics.

The label web comprises an area of weakness that separates the label portion from the skeletal matrix portion, thereby facilitating detachment of the label portion from the label web. This area of weakness defines the label portion of the label web. The area of weakness may comprise one or more perforations, thinned areas, scored sections, die cuts, laser cuts and/or micro-tags. The area of weakness may also comprise incomplete or partial lamination of the label web to the carrier web.

The label web may comprise a plurality of label portions. The label web comprises one or more skeletal matrix portions. Each of the label portions may be separated from the one or more skeletal matrix portions by an area of weakness.

A gap of between 0.01 mm and 1.5 mm, preferably between 0.1 mm and 1 mm and most preferably between 0.3 mm and 0.8 mm, may be provided between a label portion and a skeletal matrix portion as an area of weakness. This gap may be bridged by micro-tags.

The feedstock web may not comprise a removable liner layer. As is conventionally known in the art, the term "liner layer" relates to a layer that extends over the heat sealable layer of a label, thereby preventing the label from unintentionally attaching to a surface before the in-mould labelling process occurs. "Removable" in this instance is intended to mean that the liner layer can be easily removed from the feedstock web without affecting the structure of the feedstock web itself, for example without affecting the other layers of the feedstock web. The carrier web is therefore not a removable liner layer.

The use of a heat sealable layer rather than an adhesive layer in the present invention means that such a liner layer is not required, as the layer will only seal under certain sealing conditions, such as elevated temperature. Additionally, the carrier web provides support to the feedstock web, such that a liner layer is not required. This therefore reduces the waste associated with the in-mould labelling process of the invention, as well as increasing the ease of applying the labels to an article.

The carrier web may comprise a polymer film, preferably a polyolefinic film. The carrier web may comprise paper. The carrier web may be a monolayer film or a multilayer film. The carrier web may be transparent or opaque. If the carrier web is transparent, this may create transparent windows in the feedstock web when a label portion is removed. The carrier web may be between 15 and 50 µm thick, preferably between 20 and 40 µm thick.

The carrier web may not comprise any areas of weakness aligned with and/or intersecting the areas of weakness on the label web. The carrier web may not comprise any areas of weakness, including perforations, thinned areas, scored sections, die cuts, laser cuts and/or micro-tags. The carrier web may be a continuous film. This improves the reinforcement provided by the carrier web and further reduces the tearing of the film as it is passed through in-mould labelling machinery.

The carrier web may be laminated to the label web in any conventional manner. The carrier web may be laminated to the label web using a lamination adhesive, or using a lamination process that does not involve a lamination adhesive, such as thermally activatable lamination. The carrier web may be laminated to the entire surface area of the one or more skeletal matrix portions. This increases the reinforcement provided by the carrier web and can help to increase the ease with which the label portion is removed. The carrier web may be laminated to part of the one or more skeletal matrix portions. This is easier to manufacture and requires less lamination adhesive.

The carrier web may be partly laminated to a label portion of the label web. The lamination adhesive may extend from a skeletal matrix portion into a label portion of the label web. The carrier web is not laminated over the entire surface of the label portion. The lamination adhesive may therefore extend around the perimeter of the label portion and may form a continuous line around the perimeter of the label portion. This provides a means for attaching the label portion to the feedstock web, while still allowing the label portion to be removed during an in-mould labelling process.

The label web may be only laminated to the carrier web in the one or more skeletal matrix portions. This improves the ease with which a label portion can be removed from the feedstock web during an in-mould labelling process.

The feedstock web may comprise an adhesive attaching a label portion to the carrier web. The adhesive may cover all or part of the label portion. The adhesive may extend in a line around the perimeter of the label portion. The line may be discontinuous or preferably continuous. This arrangement is easy to manufacture and provides sufficient adhesion of the label portion to the feedstock web while also allowing the label portion to be removed easily.

The adhesive may be present in a plurality of isolated regions of a label portion. These isolated regions may be around the perimeter of the label portion and preferably may be at the corners of the label portion. There may be between 2 and 12 isolated regions of adhesive in the label portion, preferably between 4 and 8. The regions may be of any shape and are preferably around the extremities of the label portion. This also provides sufficient adhesion of the label portion to the feedstock web, while allowing the label portion to be removed during an in-mould labelling process.

This adhesive can be used to maintain the label portion on the feedstock web but is intended to fail in order to allow the label portion to be removed from the label web. In this embodiment, the area of weakness may fully separate the label portion and a skeletal matrix portion. Additionally, the use of the adhesive may affect the optical properties of the label portion in the regions comprising the adhesive and so the adhesive preferably does not cover the entire label portion and may be only around the extremities of the label portion.

The adhesive may be the same as that used to laminate the carrier web to the label web. This can reduce manufacturing costs. In this embodiment, the carrier web is therefore partly laminated to a label portion of the label web. This lamination can be used to maintain the label portion on the feedstock web. In this embodiment, the area of weakness may fully separate the label portion and a skeletal matrix portion. Alternatively, a weaker adhesive than that used to laminate the carrier web to the label web may be used.

The adhesive can be applied at the same time as the lamination adhesive, as part of the lamination process. The adhesive can alternatively be applied as a separate step either before or after the application of the lamination adhesive.

Additionally or alternatively, a label portion may be connected to a skeletal matrix portion using micro-tags. Micro-tags are small portions of the label web that extend across the area of weakness, thereby bridging the separation between the label portion and the adjacent skeletal matrix portion. Thus, in this embodiment, the label portion and the adjacent skeletal matrix portion are not entirely separated from one another.

This is an easy way to maintain a label portion on the feedstock web, without requiring any additional components such as an adhesive. The micro-tags are preferably small enough that they can easily be broken by the forces applied to the label web during the in-mould labelling process, thereby allowing the label portion to be removed from the feedstock web.

The micro-tags may have a width of between 0.1mm and 0.8mm, preferably between 0.2mm and 0.5mm. There is preferably a plurality of micro-tags. There may be between 2 and 12 micro-tags, preferably between 4 and 10 micro-tags. The micro-tags may be positioned at the corners of the label portion. The micro-tags may be positioned every 5 to 10mm around the perimeter of the label portion. Thus, the micro-tags are able to maintain the label portion in position on the feedstock web but can be broken during the in-mould labelling process.

Preferably, all of the label portions of the label web are connected to the one or more skeletal matrix portions and/or the carrier web in the same manner. This simplifies the manufacturing process and means that the same forces are required to remove the labels from the feedstock web.

The heat sealable layer may create a heat seal at a temperature above 50°C, preferably above 60°C and most preferably above 65°C. Thus, the heat sealable layer seals at the temperatures involved in forming an article during an in-mould labelling process. The heat sealable layer may comprise a hot melt adhesive, such as ethylene vinyl acetate (EVA). The hot melt adhesive has a lower melting point than that of the label web and so melts before the label web. Thus, lower temperatures can be used to attach a label portion to an article using the molten hot melt adhesive.

The use of a hot melt adhesive can also improve the optical properties of the labelled article, such as clarity. The melting of the hot melt adhesive layer provides even coverage over the surface of the label and ensures that there are no gaps between the hot melt adhesive and the label, thereby improving the optical properties of the label. The hot melt adhesive may be present at an amount of more than 1 g/m², preferably more than 3 g/m². This sufficiently binds a label portion to an article during an in-mould labelling process.

The label web may only comprise a heat sealable layer in the one or more label portions. There may therefore be no heat sealable layer in a skeletal matrix portion. This can ensure that it is only the one or more label portions that are attached to an article during an in-mould labelling process. The label web may comprise a heat sealable layer over the entire first side, thereby extending over both the one or more label portions and the one or more skeletal matrix portions. The one or more skeletal matrix portions may be coated with a material that does not bind to the article during an in-mould labelling process. This material may be applied over a heat sealable layer in the one or more skeletal matrix portions of the label web.

The feedstock web may further comprise print on the second side of the label web, i.e. the side opposite the heat sealable layer. This print will be between the label web and the carrier web. The print may be applied directly to the label web or may be applied to a printable coating on the label web. The printable coating may extend over only the one or more label portions of the label web, or over the entire surface of the label web including the one or more skeletal matrix portions. The print may be in direct contact with the carrier web. The carrier web may protect the print before and/or during the in-mould labelling process.

The ink may be heat-resistant ink, which may withstand the elevated temperatures used during an in-mould labelling process. The surface of the label web opposite the heat sealable layer may be printable.

The feedstock web may be provided with position marks that can be used to ensure the correct positioning of a label portion in the mould. The position marks may be optical markers or indentations and may be at the lateral edges of the label portion.

According to a second aspect of the present invention, there is provided an in-mould labelling method for the manufacture of a labelled article comprising the steps of:
- feeding a feedstock web as discussed above into a mould;
- forming an article in the mould such that the formed article contacts and effectively adheres to the heat sealable layer of a label portion of the label web;
- detaching the adhered label portion from the feedstock web;
- removing the formed and labelled article from the mould; and
- removing at least part of the remaining carrier web and skeletal matrix portion from the mould.

The use of the feedstock web as discussed above helps to reduce and preferably prevent tearing of the web during the in-mould labelling process. The absence of a liner layer helps to reduce the waste produced using the method, as well as the complexity of the process.

The moulding process of the present invention may be any known moulding process, for example thermoforming, vacuum forming, injection moulding, compression moulding, or blow moulding. Preferably, the moulding process is a blow moulding process, such as stretch blow moulding. This may be done in a two-step process, where the injection of the preform and the stretch blow moulding of the article are done in two separate machines.

The article may be formed from any mouldable material such as plastic, rubber or glass. Preferably the article is formed from a polymeric material for example: a polyolefin such as polypropylene (PP) or polyethylene (PE); a polyvinyl halide such as polyvinyl chloride (PVC); a polyester such a polyethylene terephthalate (PET), polyethylene naphthalate (PEN), polyethylene furanoate (PEF), Tritan^{RTM}, or polylactic acid (PLA); a polystyrene; a polyamide; a polyvinyl acetate; a polycarbonate, or mixtures thereof.

The remaining carrier web and skeletal matrix portion may be removed from the mould by means of winding a spool, gravity, vacuum suction, electrostatic forces or another recovery means. Preferably, this occurs once the in-mould labelled article is formed, more preferably once the in-mould labelled article has been removed from the mould.

The removal of the remaining carrier web and skeletal matrix portion may act to correctly position a label portion adjacent the label portion that has been removed from the feedstock web within the mould, ready to be applied to another article. Thus, additional positioning means are not required.

The step of detaching the adhered label portion from the feedstock web may be effected by removing the formed and labelled article from the mould. For example, the force of the article being removed from the mould may break the bonds between the label and the feedstock web, thereby removing the label from the feedstock web. The step of detaching the adhered label portion from the feedstock web may be effected by forming the article. This simplifies the in-mould labelling process, as an additional step to detach the label portion from the feedstock web is not required.

Additionally, this method means that the label portion can be held in position by the carrier web without requiring an additional positioning means, such as vacuum suction, to ensure the correct positioning of the label portion in the mould.

More than one feedstock web of the present invention may be introduced into a mould simultaneously. This can create a labelled article comprising more than one label. A single feedstock web may comprise one or more different label portions (having different sizes, shapes, print and/or colours). These one or more different label portions may be present within the same mould at the same time, thereby providing a highly flexible in-mould labelling process.

The article may not contact the feedstock film across its entire width during the formation of the article. The mould may be sized such that only the label portion of the label web contacts the article during its formation.

According to a third aspect of the present invention, there is provided a labelled article produced using the method discussed above. The label may cover the entire surface of the article or may cover part of the surface of the article. The label is formed from a label portion of the feedstock web described above.

The adhesion between the label and the article may be such that the label can be washed off the article using a wash fluid. This is important to ensure that the labelled article can be recycled, which may require the separation of the label material from the article. The wash fluid may be water, an aqueous solution or a solvent. The wash fluid may be a caustic solution, such as sodium hydroxide.

The wash fluid may be at an elevated temperature. The elevated temperature is preferably not greater than the degradation temperature of both the article and the label. The label may expand upon exposure to the heated wash fluid.

According to a fourth aspect of the present invention, there is provided a method of forming a feedstock web as discussed above, comprising the steps of:
- creating a heat sealable layer on a surface of a label web
- laminating a carrier web to a skeletal matrix portion of the label web on the surface opposite that of the heat sealable layer
- creating an area of weakness on the label web separating a label portion of the label web from the skeletal matrix portion of the label web.

Any of the features discussed above in relation to the first aspect of the present invention apply equally to the fourth aspect of the present invention. For example, the carrier web may not comprise any areas of weakness aligned with and/or intersecting the areas of weakness on the label web, the heat sealable layer may comprise ethylene vinyl acetate and the lamination may be over all or part of the one or more skeletal matrix portions. The label web may comprise a plurality of label portions and comprises one or more skeletal matrix portions, wherein each label portion is separated from a skeletal matrix portion by an area of weakness.

This method provides a simple way to manufacture the feedstock web discussed above, with all of the associated benefits of said feedstock web.

The label portion may be entirely separated from the one or more skeletal matrix portions by the area of weakness. The method may further comprise the step of including an adhesive between the label portion and the carrier web. The adhesive may be the same or a different adhesive to the lamination adhesive and may extend around the perimeter of the label portion or be present in isolated regions of the label portion, as discussed above in relation to the first aspect of the present invention. The adhesive acts to retain the label portion on the feedstock web, as discussed above.

Additionally or alternatively, there may be a plurality of micro-tags bridging the area of weakness between the label portion and a skeletal matrix portion. The micro-tags act to retain the label portion on the feedstock web, as discussed above. An adhesive may be present between the label portion and the carrier web in this embodiment.

The method may further comprise the step of printing on the surface of the label web opposite that of the heat sealable layer. The printing may occur after the heat sealable layer is formed on the surface of the label web and/or before the lamination step. This therefore creates a printed label portion for application to an article in an in-mould labelling process, as discussed above.

The invention will now be more particularly described with reference to the following examples and figures, in which;
Figure 1 illustrates a feedstock web according to a first embodiment of the present invention;
Figure 2 illustrates a feedstock web according to a second embodiment of the present invention;
Figure 3 illustrates the attachment of a label portion of the feedstock web of Figure 1 to an article; and
Figure 4 illustrates the attachment of a label portion of the feedstock web of Figure 2 to an article.

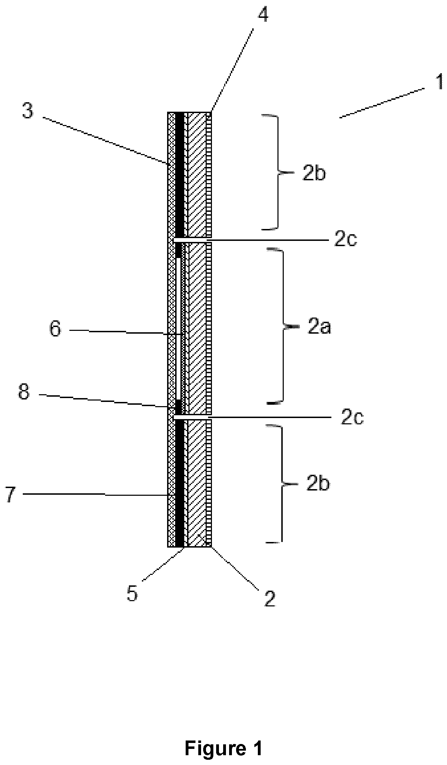

Figure 1 illustrates a feedstock web 1 according to a first embodiment of the present invention comprising a label web 2 having a heat sealable layer 4 on a first side thereof and a carrier web 3 on a second side thereof. Label web 2 comprises a label portion 2a and a skeletal matrix portion 2b. The label portion 2a and the skeletal matrix portion 2b are separated by die cuts 2c, which form areas of weakness defining the boundary of the label portion 2a. There is no connection between the label portion 2a and the skeletal matrix portion 2b and so the two are entirely separated. The feedstock web 1 will comprise a plurality of label portions 2a, but only one is illustrated.

A printable topcoat 5 is applied to the label web 2 over both the label portion 2a and the skeletal matrix portion 2b on the second side of the label web 2, i.e. the side opposite the heat sealable layer 4. Print 6 is applied to the printable topcoat 5 in the label portion 2a, thereby creating a printed label.

The label web 2 is laminated to the carrier web 3 using a lamination adhesive 7, which is applied to the side of the label web 2 comprising the printable topcoat 5. The lamination adhesive 7 extends over the entire skeletal matrix portion 2b, thereby connecting the carrier web 3 to the printable topcoat 5 on the label web 2. This helps to reinforce the skeletal matrix portion 2b during an in-mould labelling process, in which the label portion 2a is removed from the rest of the feedstock web 1.

The label portion 2a also comprises an adhesive 8 applied to the print 6 on the printable topcoat 5 on the label web 2. The adhesive 8 extends around the perimeter of the label portion 2a, as defined by the die cuts 2c. The adhesive 8 may alternatively be applied in isolated sections, for example in square portions at the corners of the label portion 2a.

The adhesive 8 is the same material as the lamination adhesive 7 but does not cover the entire label portion 2a. The adhesive 8 can therefore be applied at the same time as the lamination adhesive 7 as part of the lamination process or can be applied as a separate step either before or after the application of the lamination adhesive. The adhesive 8 therefore acts to maintain the label portion 2a on the feedstock web 1. However, the small surface area covered by the adhesive 8 ensures that the label portion 2a can be separated from the feedstock web 1 during an in-mould labelling process.

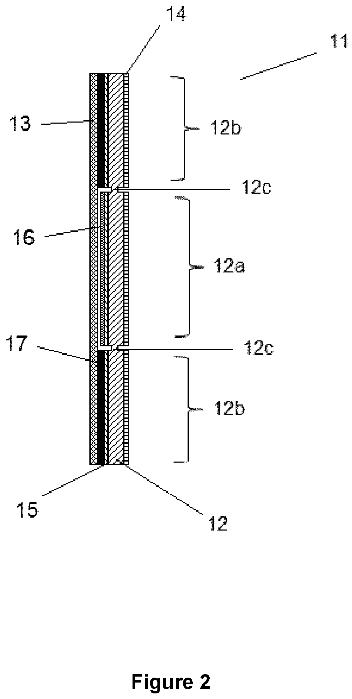

Figure 2 illustrates a feedstock web 11 according to a second embodiment of the present invention comprising a label web 12 having a heat sealable layer 14 on a first side thereof and a carrier web 13 on a second side thereof. Label web 12 comprises a label portion 12a and a skeletal matrix portion 12b.

The label portion 12a and the skeletal matrix portion 12b are separated by die cuts, which form areas of weakness defining the boundary of the label portion 12a. However, the label portion 12a and the skeletal matrix portion 12b are not entirely separated and instead are connected by micro-tags 12c. The micro-tags 12c comprise thin regions of the label web 12 that bridge the gap created by the die cut, thereby holding the label portion 12a in position on the feedstock web 11.

A printable topcoat 15 is applied to the label web 12 over both the label portion 12a and the skeletal matrix portion 12b on the second side of the label web 12, i.e. the side opposite the heat sealable layer 14. Print 16 is applied to the printable topcoat 15 in the label portion 12a, thereby creating a printed label, as is the case in the first embodiment of Figure 1.

The label web 12 is laminated to the carrier web 13 using a lamination adhesive 17, which is applied to the side of the label web 12 comprising the printable topcoat 15. The lamination adhesive 17 extends over the entire skeletal matrix portion 12b, thereby connecting the carrier web 13 to the printable topcoat 15 on the label web 12. This helps to reinforce the skeletal matrix portion 12b during an in-mould labelling process, in which the label portion 12a is removed from the rest of the feedstock web 11.

There is no lamination adhesive connecting the label portion 12a to the carrier web 13. This means that it is easier to remove the label portion 12a from the feedstock web 11 during an in-mould labelling process, simply by breaking the micro-tags 12c connecting the label portion 12a to the skeletal matrix portion 12b.

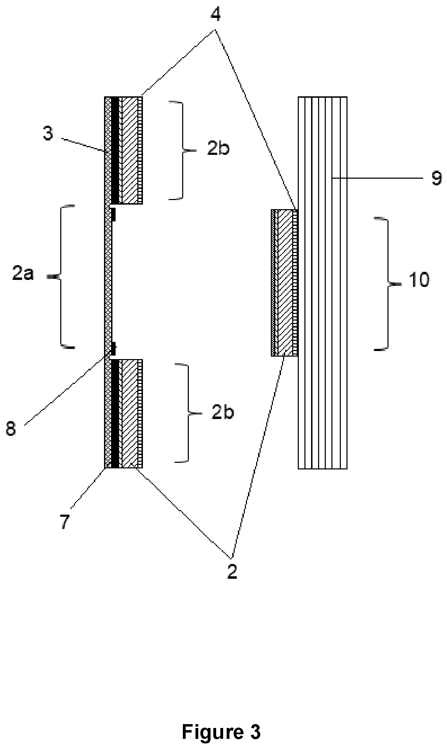

Figure 3 shows the attachment of the label portion 2a of the feedstock web shown in Figure 1 to an article 9. The feedstock web has been introduced into a mould, in which the article 9 is formed. This can be by any moulding process, for example thermoforming, vacuum forming, injection moulding, compression moulding, or blow moulding.

The heat involved in the process of forming the article 9 causes the heat sealable layer 4 to melt, thereby adhering the label web 2 to the article 9. The article 9 has then been moved away from the feedstock web in Figure 3. The skeletal matrix portion 2b is securely laminated to the carrier web 3 using the lamination adhesive 7 and so does not come away from the feedstock web. Instead, the adhesion between the heat sealable layer 4 and the article 9 is broken in the skeletal matrix portions 2b.

However, the label portion 2a has a weaker adhesion to the carrier web 3, due to the smaller amount of adhesive 8 that connects the two. Thus, when the article 9 is moved away from the feedstock web, the heat sealable layer 4 is sufficiently bound to the article 9 to break the small regions of adhesive 8, thereby separating the label portion 2a from the carrier web 3 and therefore from the feedstock web.

Thus, an in-mould labelling process using the feedstock web results in the application of a printed label 10 to the article 9 using the heat sealable layer 4 on the label web 2. The feedstock web can then be moved out of the mould, which may result in an adjacent label portion 2a of the feedstock web being correctly positioned, ready for the next in-mould labelling process.

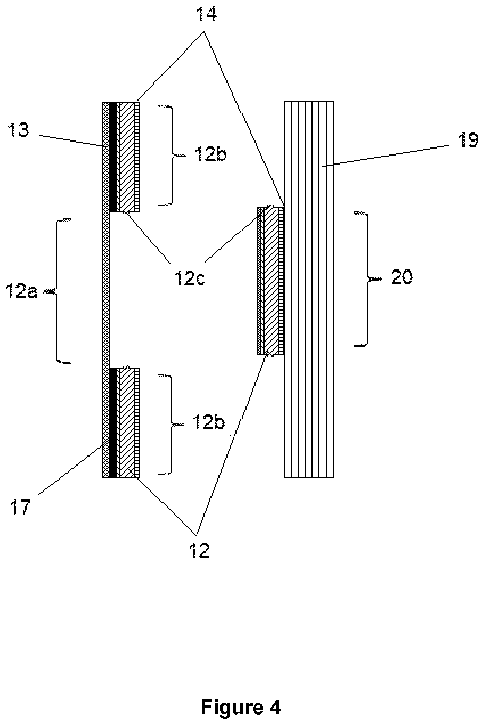

Figure 4 shows the attachment of the label portion 12a of the feedstock web shown in Figure 2 to an article 19. The feedstock web has been introduced into a mould, in which the article 19 is formed. This can be by any moulding process, for example thermoforming, vacuum forming, injection moulding, compression moulding, or blow moulding.

The heat involved in the process of forming the article 19 causes the heat sealable layer 14 to melt, thereby adhering the label web 12 to the article 19. The article 19 has then been moved away from the feedstock web in Figure 4. The skeletal matrix portion 12b is securely laminated to the carrier web 13 using the lamination adhesive 17 and so does not come away from the feedstock web. Instead, the adhesion between the heat sealable layer 14 and the article 19 is broken in the skeletal matrix portions 12b.

The label portion 12a is not adhered to the carrier web 13 and is instead only attached to the feedstock web using micro-tags 12c. Thus, when the article 19 is moved away from the feedstock web, the heat sealable layer 14 is sufficiently bound to the article 19 to break the micro-tags 12c, thereby separating the label portion 12a from the skeletal matrix portions 12b and therefore from the feedstock web.

Thus, an in-mould labelling process using the feedstock web results in the application of a printed label 20 to the article 19 using the heat sealable layer 14 on the label web 12. The feedstock web can then be moved out of the mould, which may result in an adjacent label portion 12a of the feedstock web being correctly positioned, ready for the next in-mould labelling process.

### Example 1 - Micro-tagged Label Portions

A three layer film was formed as a tube by coextruding a core layer (comprising polypropylene homopolymer, 12% of 70% TiO₂ and 3% antistatic masterbatch containing a blend of glycerol monostearate and ethoxylated amine) with a layer of polyethylene/polypropylene/polybutylene terpolymer (a random copolymer comprising polypropylene/ethylene/butylene-1) as an outer skin layer on one side of the core layer, and a laminating layer (a polypropylene/polyethylene/polybutylene random terpolymer) on the other side of the core layer. The tube was cooled and subsequently reheated before being blown to produce a three layer biaxially oriented film tube.

The film tube was then nipped, laminated to itself (laminating layer to laminating layer constituting one internal layer) and spliced to form a label web around 58µm thick containing five layers. A heat sealable layer comprising ethylene vinyl acetate was then formed on one side of the film.

The label web was printed on the side opposite that comprising the heat sealable layer and partially laminated to a carrier web on the printed face using a lamination adhesive. The lamination adhesive covered all of the skeletal matrix portion of the label web but did not extend into the label portions. The label web was then die cut to separate the label portions from the skeletal matrix portion of the label web, leaving micro-tags connecting each label portion to the skeletal matrix portion.

The resulting feedstock web was then mounted on a spool and fed through a mould to be collected on a second spool. As each label portion was positioned in the mould, a polymeric bottle preform of PET was stretch blown in the mould to make contact with the label portion as described above. The labelled blown bottle was then removed from the mould with the label adhered thereto, thereby breaking the micro-tags and leaving the remaining carrier web and skeletal matrix portion in the mould. The second spool was then wound forward to bring a new label portion into the mould and the process was repeated.

### Example 2 - Adhered Label Portions

A three layer film was formed as a tube by coextruding a core layer (comprising polypropylene homopolymer, 12% of 70% TiO₂ and 3% antistatic masterbatch containing a blend of glycerol monostearate and ethoxylated amine) with a layer of polyethylene/polypropylene/polybutylene terpolymer (a random copolymer comprising polypropylene/ethylene/butylene-1) as an outer skin layer on one side of the core layer, and a laminating layer (a polypropylene/polyethylene/polybutylene random terpolymer) on the other side of the core layer. The tube was cooled and subsequently reheated before being blown to produce a three layer biaxially oriented film tube.

The film tube was then nipped, laminated to itself (laminating layer to laminating layer constituting one internal layer) and spliced to form a label web around 58µm thick containing five layers. A heat sealable layer comprising ethylene vinyl acetate was then formed on one side of the film.

The label web was printed on the side opposite that comprising the heat sealable layer and laminated to a carrier web on the printed face using a lamination adhesive. The lamination adhesive covered all of the skeletal matrix portion of the label web and extended slightly into the label portions, thereby creating a narrow border of lamination adhesive around the perimeter of each label portion. The label web was then die cut to entirely separate each label portion from the skeletal matrix portion of the label web.

The resulting feedstock web was then mounted on a spool and fed through a mould to be collected on a second spool. As each label portion was positioned in the mould, a polymeric bottle preform of PET was stretch blown in the mould to make contact with the label portion as described above. The labelled blown bottle was then removed from the mould with the label adhered thereto, thereby breaking the adhesion around the perimeter of the label portion and leaving the remaining carrier web and skeletal matrix portion in the mould. The second spool was then wound forward to bring a new label portion into the mould and the process was repeated.

## Claims

1. A feedstock web (1, 11) for in-mould labelling comprising a label web (2, 12) wherein an area of weakness separates a label portion (2a, 12a) of the label web (2, 12) from a skeletal matrix portion (2b, 12b) of the label web (2, 12), the label web (2, 12) having a heat sealable layer (4, 14) on a first side and a carrier web (3, 13) laminated to the skeletal matrix portion (2b, 12b) of the label web (2, 12) on a second side, the carrier web (3, 13) serving to reinforce the skeletal matrix portion (2b, 12b) against tearing when the label portion (2a, 12a) is detached from the skeletal matrix portion (2b, 12b) and the carrier web (3, 13) in an in-mould labelling process.

2. The feedstock web (1, 11) according to Claim 1, wherein the feedstock web (1, 11) does not comprise a removable liner layer and/orwherein the carrier web (3, 13) does not comprise any areas of weakness aligned with and/or intersecting the area of weakness on the label web (2, 12).

3. The feedstock web (1) according to Claim 1 or Claim 2, wherein the carrier web (3) is partly laminated to the label portion (2a) of the label web (2).

4. The feedstock web (11) according to Claim 1 or Claim 2, wherein the carrier web (13) is only laminated to the label web (12) in the skeletal matrix portion (12b) of the label web (12).

5. The feedstock web (1) according to Claim 4, further comprising an adhesive (8) attaching the label portion (2a) to the carrier web (3); optionally
a) wherein the adhesive (8) extends in a line around the perimeter of the label portion (2a); or
b) wherein the adhesive (8) is present in a plurality of isolated regions of the label portion (2a).

6. The feedstock web according to Claim 5 wherein the adhesive (8) is the same as that used to laminate the carrier web (3) to the label web (12).

7. The feedstock web (11) according to any preceding claim, wherein the label portion (12a) is connected to the skeletal matrix portion (12b) using micro-tags (12c).

8. The feedstock web (1, 11) according to any preceding claim, wherein the heat sealable layer (4, 14) comprises ethylene vinyl acetate, and/or
wherein the feedstock web further comprises print (6, 16) on the side of the label web (2, 12) opposite the heat sealable layer (4, 14).

9. An in-mould labelling method for the manufacture of a labelled article (9, 19) comprising the steps of:
- feeding a feedstock web (1, 11) according to any preceding claim into a mould;
- forming an article (9, 19) in the mould such that the formed article (9, 19) contacts and effectively adheres to the heat sealable layer (4, 14) of a label portion (2a, 12a) of the label web (2, 12);
- detaching the adhered label portion (2a, 12a) from the feedstock web (1, 11);
- removing the formed and labelled article (9, 19) from the mould; and
- removing at least part of the remaining carrier web (3, 13) and skeletal matrix portion (2b, 12b) from the mould.

10. The method of Claim 9, wherein the step of detaching the adhered label portion (2a, 12a) from the feedstock web (1, 11) is effected by removing the formed and labelled article (9, 19) from the mould or by the step of forming the article (9, 19).

11. A labelled article (9, 19) produced using the method of any one of Claims 9 to 10.

12. The labelled article (9, 19) according to Claim 11, wherein the label (10, 20) can be washed off the article (9, 19) using a wash fluid, optionally at an elevated temperature.

13. A method of forming a feedstock web (1, 11) according to any one of Claims 1 to 8, comprising the steps of:
- creating a heat sealable layer (4, 14) on a surface of a label web (2, 12)
- laminating a carrier web (3, 13) to a skeletal matrix portion (2b, 12b) of the label web (2, 12) on the surface opposite that of the heat sealable layer (4, 14)
- creating an area of weakness on the label web (2, 12) separating a label portion (2a, 12a) of the label web (2, 12) from the skeletal matrix portion (2b, 12b) of the label web (2, 12).

14. The method of Claim 13, wherein the area of weakness;
a) entirely separates the label portion (2a) from the skeletal matrix portion (2b) and further comprising the step of including an adhesive (8) between the label portion (2a) and the carrier web (3); or
b) comprises a plurality of micro-tags (12c) bridging the separation between the label portion (12a) and the skeletal matrix portion (12b).

15. The method of any one of Claims 13 to 14, further comprising the step of printing on the surface of the label web (2, 12) opposite that of the heat sealable layer (4, 14).

## Patentansprüche

1. Ausgangsmaterialbahn (1, 11) zum In-Mould-Etikettieren, umfassend eine Etikettenbahn (2, 12), wobei eine Schwachstelle einen Etikettenabschnitt (2a, 12a) der Etikettenbahn (2, 12) von einem Skelettmatrixabschnitt (2b, 12b) der Etikettenbahn (2, 12) trennt, die Etikettenbahn (2, 12) eine heißsiegelbare Schicht (4, 14) auf einer ersten Seite und eine Trägerbahn (3, 13) aufweist, die auf einer zweiten Seite an den Skelettmatrixabschnitt (2b, 12b) der Etikettenbahn (2, 12) laminiert ist, die Trägerbahn (3, 13) dazu dient, den Skelettmatrixabschnitt (2b, 12b) gegen ein Reißen zu verstärken, wenn der Etikettenabschnitt (2a, 12a) in einem In-Mould-Etikettierverfahren von dem Skelettmatrixabschnitt (2b, 12b) und der Trägerbahn (3, 13) abgelöst wird.

2. Ausgangsmaterialbahn (1, 11) nach Anspruch 1, wobei die Ausgangsmaterialbahn (1, 11) keine entfernbare Deckschicht umfasst und/oder die Trägerbahn (3, 13) keine Schwachstellen umfasst, die mit der Schwachstelle auf der Etikettenbahn (2, 12) ausgerichtet sind und/oder sie schneiden.

3. Ausgangsmaterialbahn (1) nach Anspruch 1 oder Anspruch 2, wobei die Trägerbahn (3) teilweise an den Etikettenabschnitt (2a) der Etikettenbahn (2) laminiert ist.

4. Ausgangsmaterialbahn (11) nach Anspruch 1 oder Anspruch 2, wobei die Trägerbahn (13) nur in dem Skelettmatrixabschnitt (12b) der Etikettenbahn (12) an die Etikettenbahn (12) laminiert ist.

5. Ausgangsmaterialbahn (1) nach Anspruch 4, ferner umfassend ein Haftmittel (8), das den Etikettenabschnitt (2a) an der Trägerbahn (3) befestigt; optional
a) wobei sich das Haftmittel (8) in einer Linie um den Umfang des Etikettenabschnitts (2a) erstreckt; oder
b) wobei das Haftmittel (8) in einer Vielzahl von isolierten Bereichen des Etikettenabschnitts (2a) vorhanden ist.

6. Ausgangsmaterialbahn nach Anspruch 5, wobei das Haftmittel (8) dasselbe ist wie das, das verwendet wird, um die Trägerbahn (3) an die Etikettenbahn (12) zu laminieren.

7. Ausgangsmaterialbahn (11) nach einem der vorhergehenden Ansprüche, wobei der Etikettenabschnitt (12a) mithilfe von Mikro-Tags (12c) mit dem Skelettmatrixabschnitt (12b) verbunden ist.

8. Ausgangsmaterialbahn (1, 11) nach einem der vorhergehenden Ansprüche, wobei die heißsiegelbare Schicht (4, 14) Ethylenvinylacetat umfasst und/oder
wobei die Ausgangsmaterialbahn ferner einen Druck (6, 16) auf der Seite der Etikettenbahn (2, 12) gegenüber der heißsiegelbaren Schicht (4, 14) umfasst.

9. In-Mould-Etikettierverfahren zur Herstellung eines etikettierten Gegenstands (9, 19), umfassend die folgenden Schritte:
- Zuführen einer Ausgangsmaterialbahn (1, 11) nach einem der vorhergehenden Ansprüche in eine Form;
- derartiges Bilden eines Gegenstands (9, 19) in der Form, dass der gebildete Gegenstand (9, 19) die heißsiegelbare Schicht (4, 14) eines Etikettenabschnitts (2a, 12a) der Etikettenbahn (2, 12) berührt und wirksam daran haftet;
- Ablösen des anhaftenden Etikettenabschnitts (2a, 12a) von der Ausgangsmaterialbahn (1, 11);
- Entfernen des gebildeten und etikettierten Gegenstands (9, 19) aus der Form; und
- Entfernen von mindestens einem Teil der verbleibenden Trägerbahn (3, 13) und des Skelettmatrixabschnitts (2b, 12b) aus der Form.

10. Verfahren nach Anspruch 9, wobei der Schritt des Ablösens des anhaftenden Etikettenabschnitts (2a, 12a) von der Ausgangsmaterialbahn (1, 11) durch Entfernen des gebildeten und etikettierten Gegenstands (9, 19) aus der Form oder durch den Schritt des Bildens des Gegenstands (9, 19) erwirkt wird.

11. Etikettierter Gegenstand (9, 19), der mithilfe des Verfahrens nach einem der Ansprüche 9 bis 10 produziert ist.

12. Etikettierter Gegenstand (9, 19) nach Anspruch 11, wobei das Etikett (10, 20) mithilfe eines Waschfluids, optional bei einer erhöhten Temperatur, von dem Gegenstand (9, 19) abgewaschen werden kann.

13. Verfahren zum Bilden einer Ausgangsmaterialbahn (1, 11) nach einem der Ansprüche 1 bis 8, umfassend die folgenden Schritte:
- Erzeugen einer heißsiegelbaren Schicht (4, 14) auf einer Oberfläche einer Etikettenbahn (2, 12)
- Laminieren einer Trägerbahn (3, 13) auf einen Skelettmatrixabschnitt (2b, 12b) der Etikettenbahn (2, 12) auf der Oberfläche gegenüber der heißsiegelbaren Schicht (4, 14)
- Kreieren einer Schwachstelle auf dem Etikettenband (2, 12), die einen Etikettenabschnitt (2a, 12a) der Etikettenbahn (2, 12) von dem Skelettmatrixabschnitt (2b, 12b) der Etikettenbahn (2, 12) trennt.

14. Verfahren nach Anspruch 13, wobei die Schwachstelle;
a) den Etikettenabschnitt (2a) vollständig von dem Skelettmatrixabschnitt (2b) trennt und ferner den Schritt eines Einbringens eines Haftmittels (8) zwischen dem Etikettenabschnitt (2a) und der Trägerbahn (3) umfasst; oder
b) eine Vielzahl von Mikro-Tags (12c) umfasst, die die Trennung zwischen dem Etikettenabschnitt (12a) und dem Skelettmatrixabschnitt (12b) überbrücken.

15. Verfahren nach einem der Ansprüche 13 bis 14, ferner umfassend den Schritt eines Druckens auf der Oberfläche der Etikettenbahn (2, 12) gegenüber der der heißsiegelbaren Schicht (4, 14).

## Revendications

1. Bande d'alimentation (1, 11) pour un étiquetage dans un moule, comprenant une bande d'étiquettes (2, 12) dans laquelle une zone de fragilité sépare une partie étiquette (2a, 12a) de la bande d'étiquettes (2, 12) d'une partie matrice de squelette (2b, 12b) de la bande d'étiquettes (2, 12), la bande d'étiquettes (2, 12) présentant une couche thermoscellable (4, 14) sur un premier côté et une bande de support (3, 13) contrecollée à la partie matrice de squelette (2b, 12b) de la bande d'étiquettes (2, 12) sur un second côté, la bande de support (3, 13) servant à renforcer la partie matrice de squelette (2b, 12b) contre la déchirure lorsque la partie étiquette (2a, 12a) est détachée de la partie matrice de squelette (2b, 12b) et de la bande de support (3, 13) dans un processus d'étiquetage dans un moule.

2. Bande d'alimentation (1, 11) selon la revendication 1, dans laquelle la bande d'alimentation (1, 11) ne comprend pas de couche de doublure amovible et/ou dans laquelle la bande de support (3, 13) ne comprend aucune zone de fragilité alignée avec la zone de fragilité sur la bande d'étiquettes (2, 12), et/ou croisant celle-ci.

3. Bande d'alimentation (1) selon la revendication 1 ou la revendication 2, dans laquelle la bande de support (3) est partiellement contrecollée à la partie étiquette (2a) de la bande d'étiquettes (2).

4. Bande d'alimentation (11) selon la revendication 1 ou la revendication 2, dans laquelle la bande de support (13) est uniquement contrecollée à la bande d'étiquettes (12) dans la partie matrice de squelette (12b) de la bande d'étiquettes (12).

5. Bande d'alimentation (1) selon la revendication 4, comprenant également un adhésif (8) fixant la partie étiquette (2a) à la bande de support (3) ; éventuellement
a) dans laquelle l'adhésif (8) s'étend sur une ligne autour du périmètre de la partie étiquette (2a) ; ou
b) dans laquelle l'adhésif (8) est présent dans une pluralité de régions isolées de la partie étiquette (2a).

6. Bande d'alimentation selon la revendication 5 dans laquelle l'adhésif (8) est le même que celui utilisé pour contrecoller la bande de support (3) sur la bande d'étiquettes (12).

7. Bande d'alimentation (11) selon une quelconque revendication précédente, dans laquelle la partie étiquette (12a) est reliée à la partie matrice de squelette (12b) à l'aide de micro-étiquettes (12c).

8. Bande d'alimentation (1, 11) selon une quelconque revendication précédente, dans laquelle la couche thermoscellable (4, 14) comprend de l'acétate de vinyle-éthylène, et/ou
dans lequel la bande d'alimentation comprend également une impression (6, 16) sur le côté de la bande d'étiquettes (2, 12) en regard de la couche thermoscellable (4, 14).

9. Procédé d'étiquetage dans le moule pour la fabrication d'un article étiqueté (9, 19) comprenant les étapes consistant à :
- introduire une bande d'alimentation (1, 11) selon une quelconque revendication précédente à l'intérieur d'un moule ;
- former un article (9, 19) dans le moule de telle sorte que l'article formé (9, 19) entre en contact et adhère efficacement à la couche thermoscellable (4, 14) d'une partie étiquette (2a, 12a) de la bande d'étiquettes (2, 12) ;
- détacher la partie étiquette adhérée (2a, 12a) de la bande d'alimentation (1, 11) ;
- retirer l'article formé et étiqueté (9, 19) du moule ; et
- retirer au moins une partie de la bande de support restante (3, 13) et une partie matrice de squelette (2b, 12b) du moule.

10. Procédé selon la revendication 9, dans lequel l'étape de séparation de la partie étiquette adhérée (2a, 12a) de la bande d'alimentation (1, 11) est effectuée en retirant l'article formé et étiqueté (9, 19) du moule ou au moyen de l'étape de formation de l'article (9, 19).

11. Article étiqueté (9, 19) produit à l'aide du procédé selon l'une quelconque des revendications 9 à 10.

12. Article étiqueté (9, 19) selon la revendication 11, dans lequel l'étiquette (10, 20) peut être enlevée de l'article (9, 19) à l'aide d'un liquide de lavage, éventuellement à une température élevée.

13. Procédé de formation d'une bande d'alimentation (1, 11) selon l'une quelconque des revendications 1 à 8, comprenant les étapes consistant à :
- créer une couche thermoscellable (4, 14) sur une surface d'une bande d'étiquettes (2, 12)
- contrecoller une bande de support (3, 13) à une partie matrice de squelette (2b, 12b) de la bande d'étiquettes (2, 12) sur la surface opposée à celle de la couche thermoscellable (4, 14)
- créer une zone de fragilité sur la bande d'étiquettes (2, 12) séparant une partie étiquette (2a, 12a) de la bande d'étiquettes (2, 12) de la partie matrice de squelette (2b, 12b) de la bande d'étiquettes (2, 12).

14. Procédé selon la revendication 13, dans lequel la zone de fragilité ;
a) sépare entièrement la partie étiquette (2a) de la partie matrice de squelette (2b) et comprenant également l'étape d'inclusion d'un adhésif (8) entre la partie étiquette (2a) et la bande de support (3) ; ou
b) comprend une pluralité de micro-étiquettes (12c) comblant l'espace entre la partie étiquette (12a) et la partie matrice de squelette (12b).

15. Procédé selon l'une quelconque des revendications 13 à 14, comprenant également l'étape d'impression sur la surface de la bande d'étiquettes (2, 12) en regard de celle de la couche thermoscellable (4, 14).
